# FASCICULE DE BREVET EUROPEEN

(11) **EP 2 070 268 B1**
(45) Date de publication et mention de la délivrance du brevet: **10.01.2018**
(21) Numéro de dépôt: 07823848.2
(22) Date de dépôt: 25.09.2007
(51) Int. Cl.: H04L 12/70

(54) **ROUTEUR COEUR APTE A SECURISER UN ROUTEUR DE SORTIE D'UN SYSTEME AUTONOME**
KERN-ROUTER MIT FUNKTION ZUR SICHERUNG DES AUSGANGSROUTERS EINES AUTONOMEN SYSTEMS
CORE ROUTER CAPABLE OF SECURING THE OUTPUT ROUTER OF AN AUTONOMOUS SYSTEM

(30) Priorité: 25.09.2006 FR 0653925
(43) Date de publication de la demande: 17.06.2009
(73) Titulaire: Orange, 75015 Paris (FR)
(72) Inventeur: DECRAENE, Bruno, 92170 Vanves (FR); LE ROUX, Jean-Louis, 22300 Lannion (FR)
(74) Mandataire: Delumeau, François Guy
(86) Numéro de dépôt international: PCT/FR2007/052003
(87) Numéro de publication internationale: WO 2008/037921

(56) Documents cités:
- WO-A-2005/013564
- US-A1- 2005 111 351
- US-A1- 2006 153 067
- US-A1- 2006 209 682
- BLESS R ET AL: "Fast scoped rerouting for BGP" NETWORKS, 2003. ICON2003. THE 11TH IEEE INTERNATIONAL CONFERENCE ON SEPT. 28-OCT. 1, 2003, PISCATAWAY, NJ, USA,IEEE, 28 septembre 2003 (2003-09-28), pages 25-30, XP010683497 ISBN: 0-7803-7788-5

## Description

### Arrière-plan de l'invention

L'invention se situe dans le domaine des télécommunications, et plus particulièrement des réseaux de commutation par étiquettes de type IP/MPLS (Internet Protocol / Multi Protocol Label Switching).

La technologie MPLS n'est pas décrite ici, pour plus d'informations on peut se référer au document de l'Internet Engineering Task Force (IETF), Request for Comment RFC 3031.

L'invention se situe dans le contexte des réseaux IP/MPLS comportant des routeurs de coeurs, appelés routeurs P, et des routeurs d'accès ou de bordure appelés ASBR.

Certains réseaux IP/MPLS dits de type « Flat IP » utilisent la commutation IP sur tous les routeurs coeurs situés entre les routeurs de bordure.

D'autres utilisent la commutation MPLS sur tous les routeurs coeurs situés entre les routeurs de bordure, les routeurs de bordure utilisant des tunnels MPLS pour s'envoyer des paquets IP. Dans cette technique, particulièrement décrite à la section 4.6 « LSP Tunneling between BGP Border Routers » du document RFC 3031 précité, les routeurs coeurs n'ont pas besoin de connaître les routes externes annoncées par les routeurs de bordure au moyen du protocole BGP (Border Gateway Protocol).

Dans la pure terminologie BGP, un ASBR est un routeur de bordure d'un système autonome établissant au moins une session eBGP avec un autre système autonome. Dans ce document, nous utiliserons la notion de routeur de sortie d'un système autonome, correspondant à une définition plus étendue du terme ASBR et qui, par définition s'applique à tout routeur de bordure de ce système autonome annonçant des routes BGP pour lesquelles il est un point de passage obligé, ce qui signifie qu'il est le next-hop BGP, ou que le next-hop BGP appartient à l'une de ses interfaces.

Certains services de communication ont de fortes exigences en termes de disponibilité (par exemple service de voix (VoIP), télémédecine). Ces services nécessitent un reroutage déterministe en moins de 100ms en cas de panne de lien ou de noeud. Aujourd'hui, la seule technologie permettant de telles performances de reroutage est le Fast Reroute consistant à établir à l'avance des chemins de secours locaux contournant l'élément protégé. En cas de panne, le noeud directement en amont met à jour sa table de routage et bascule le trafic sur le chemin de secours. Cette méthode ne nécessite aucun calcul de route ni signalisation après la panne. De plus, les routes de secours sont préinstallées dans les tables de commutation des routeurs, ce qui garantit un temps de reroutage déterministe inférieur à 100ms.

Il existe deux modes pour réaliser cette protection :
- le mode Fast Reroute MPLS reposant sur l'établissement de tunnels primaires MPLS-TE de bout en bout, protégés localement par des tunnels de secours MPLS-TE, ce mode étant décrit dans le document RFC 4090 de l'I ETF ;
- le mode Fast Reroute IP reposant sur une protection de routes IP par des routes de secours évitant l'élément protégé et sans risque de boucle. Ces routes de secours peuvent être en mode connecté avec des tunnels MPLS-TE de secours locaux ou en mode non connecté lorsqu'il n'y a pas de risque de boucle. Pour plus de détails sur ce deuxième mode de réalisation, on peut se reporter aux documents suivants :
   - Shen, Pan, « Nexthop Fast ReRoute for IP and MPLS » (http://www.potaroo.net/ietf/all-ids/draft-shen-nhop-fastreroute-01.txt) et
   - Shand, Bryant, « IP Fast Reroute Framework », http://www.ietf.org/internet-drafts/draft-ietf-rtgwg-ipfrr-framework-05.txt.

Le mode Fast Reroute MPLS permet, avec un maillage des routeurs de bordure par des tunnels MPLS-TE primaires, une protection des liens ASBR-P, P-P et des noeuds P. Il passe difficilement à l'échelle car il nécessite un maillage de tous les routeurs ASBR et requiert donc un nombre de tunnels au carré du nombre de ASBRs. Il n'est donc applicable en pratique qu'à un faible nombre d'ASBRs (∼100).

Le mode Fast Reroute IP permet une protection des liens ASBR-P, P-P et des noeuds P. Il ne nécessite pas de tunnels MPLS-TE primaires et passe donc beaucoup mieux à l'échelle.

Les techniques de Fast Reroute actuelles, présentées ci dessus ne permettent pas de protéger les routeurs ASBR d'un réseau IP/MPLS.

En effet, la technique Fast Reroute MPLS, telle que définie dans le document RFC 4090, qui nécessite des tunnels RSVP-TE entre les sites autonomes ne peut être utilisée dans des réseaux de grande échelle.

Par ailleurs, la technique Fast Reroute IP ne permet pas de protéger les routeurs ASBR, ceux-ci étant situés en extrémité de tunnel ou étant un point de sortie désigné du réseau et ne pouvant donc pas être contournés en cas de panne.

Par ailleurs, les techniques de protection actuelles n'utilisent que les informations du protocole de routage interne IGP (Internal Gateway Protocol), et ne peuvent sécuriser que les pannes d'éléments internes au réseau. Elles ne sont donc pas utilisables pour sécuriser les ASBR, routeurs de bordure entre deux sites autonomes, leur protection nécessitant la prise en compte les informations de routage externe distribuées par le protocole BGP.

Les seuls mécanismes de sécurisation contre les pannes de routeur ASBR disponibles aujourd'hui reposent sur la convergence du protocole BGP qui offrent des temps de sécurisation supérieurs à la seconde, incompatibles avec les exigences de disponibilité des services temps réels.

Il est donc primordial pour assurer une bonne disponibilité de routeur client à routeur client de définir de nouveaux mécanismes permettant de protéger rapidement les routeurs ASBR, et capables de supporter un grand nombre de routeurs clients (i.e. passage à l'échelle). US2006/0153067 explique comment mettre en place manuellement des tunnels de secours pour des routeurs de bordure.

### Objet et résumé de l'invention

Selon un premier aspect, l'invention vise un procédé de routage mis en oeuvre par un routeur coeur selon la revendication 1, le programme d'ordinateur correspondant selon la revendication 3, le routeur coeur correspondant selon la revendication 4, un procédé de routage mis en oeuvre dans un routeur de sortie de secours selon la revendication 5, son programme correspondant selon la revendication 7, son routeur de sortie selon la revendication 8 et enfin un procédé de routage mis en oeuvre dans un routeur protecteur selon la revendication 9, son programme d'ordinateur selon la revendication 11 et son routeur de sortie selon la revendication 12. Après la panne d'un routeur de sortie nominal, les protocoles IGP, BGP, LDP, et RSVP-TE vont réagir et la route vers ce routeur de sortie nominal va être supprimée dans les tables des autres routeurs coeurs et des autres routeurs de sortie.

La connectivité vers ce routeur de sortie nominal et les destinations BGP annoncées par ce routeur sont alors perdues jusqu'à la convergence BGP.

Puisque la panne a été corrigée localement grâce à l'invention, une convergence rapide n'est plus indispensable. Par contre, il est préférable que la convergence se fasse sans interruption entre le chemin nominal et le chemin de secours. Il faut en particulier mieux éviter que les routeurs détruisent le chemin nominal protégé avant qu'ils aient connaissance du chemin de secours et qu'ils l'utilisent.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 représentent, dans leur environnement, des routeurs conformes à l'invention dans un premier mode de réalisation de l'invention ;
- les figures 3 et 4 représentent, dans leur environnement, des routeurs conformes à l'invention dans un deuxième mode de réalisation de l'invention ;
- la figure 5 représente, sous forme d'organigramme, les principales étapes d'un premier procédé de routage conforme à l'invention dans un mode particulier de réalisation ; et
- la figure 6 représente, sous forme d'organigramme, les principales étapes d'un deuxième procédé de routage conforme à l'invention dans un mode particulier de réalisation.

Par tunnel, on entend ici une définition générique du terme. Il peut s'agir d'un tunnel GRE, pour "Generic Routine Encapsulation", d'un tunnel L2TPv3, pour "Layer 2 Tunneling Protocol Version 3" ou d'un tunnel MPLS, pour "Multi Protocol Label Switching".

### Description détaillée d'un premier mode de réalisation

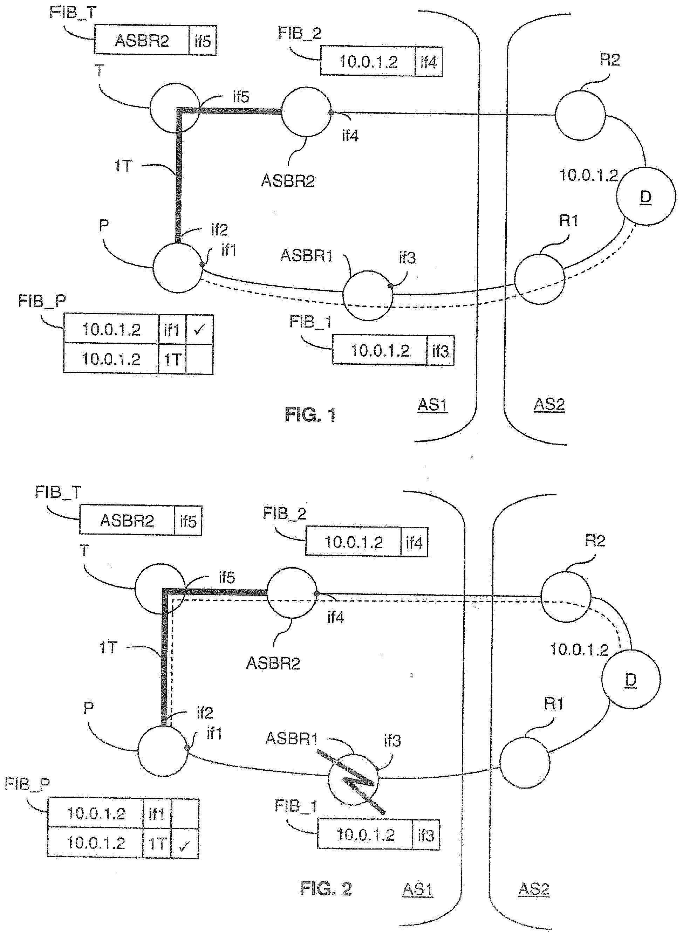

La figure 1 représente un réseau comportant deux systèmes autonomes AS1 et AS2.

Le système autonome AS1 comporte un routeur coeur P conforme à l'invention, dont une table de commutation est référencée FIB_P.

Le routeur coeur P est connecté à un routeur de sortie nominal ASBR1 du système autonome AS1, apte à acheminer un trafic destiné au deuxième système autonome AS2. La table de commutation du routeur de sortie nominal ASBR1 est référencée FIB_1.

Le système autonome AS1 comporte également un routeur de sortie ASBR2 conforme à l'invention destiné à acheminer un trafic au deuxième système autonome AS2. La table de commutation du routeur de sortie ASBR2 est référencée FIB_2.

Dans le deuxième système autonome AS2, on a représenté une destination D d'adresse 10.0.1.2, et deux routeurs R1 et R2 agencés entre la destination D et les routeurs de sortie ASBR1 et ASBR2.

Dans l'exemple décrit ici, le premier système autonome AS1 comporte un routeur de transit T entre le routeur coeur P et le routeur de sortie ASBR2. La table de commutation du routeur de transit T est référencée FIB_T.

Dans l'exemple décrit ici, le routeur coeur P et le routeur de sortie ASBR2 coopèrent pour sécuriser des pannes affectant un acheminement du trafic du routeur coeur P vers le routeur de sortie nominal ASBR1.

En conséquence, la table de commutation FIB_P du routeur coeur P comporte deux sorties pour la destination D d'adresse 10.0.1.2, à savoir :
- une sortie nominale, sur son interface if1, vers le routeur de sortie nominal ASBR1 ; et
- une sortie de secours vers une route prédéterminée dans un tunnel 1T ne passant pas par le routeur de sortie ASBR1, l'extrémité de ce tunnel 1T étant constituée par le routeur de sortie ASBR2.

Le routeur de sortie ASBR2 est donc un routeur de sortie de secours au sens de l'invention.

Dans l'exemple décrit ici, le tunnel 1T traverse le routeur de transit T et la table de commutation FIB_T de ce routeur est configurée pour aiguiller les paquets destinés au routeur de sortie de secours ASBR2 sur son interface if5.

La figure 1 représente l'état du réseau avant la panne affectant l'acheminement du trafic du routeur coeur P vers le routeur de sortie nominal ASBR1.

Aussi, seule la sortie nominale de la table de commutation FIB_P du routeur coeur P, est activée. En conséquence, lorsque le routeur coeur P reçoit un paquet destiné au site D, il envoie ce paquet sur son interface if1 à destination du routeur de sortie nominal.

Sur réception de ce paquet, le routeur de sortie nominal transfère ce paquet, conformément à sa table de commutation FIB_1, sur son interface if3 vers le routeur R1 du deuxième système autonome AS2, ce paquet étant enfin aiguillé au sein du deuxième système autonome vers la destination D.

La route suivie, avant la panne, par les paquets entre le routeur coeur P et la destination D est représentée en traits pointillés sur la figure 1.

Nous supposerons maintenant, en référence à la figure 2, que le routeur de sortie nominal ASBR1 tombe en panne.

Conformément à l'invention, le routeur coeur P détecte une panne affectant sa communication vers le routeur de sortie nominal ASBR1.

Suite à cette détection, il désactive la sortie nominale dans sa table de commutation FIB_P et active la sortie de secours vers le tunnel 1T.

Tant que cette sortie de secours est activée, lorsque le routeur coeur P reçoit un paquet destiné au site D, il envoie ce paquet dans le tunnel 1T vers le routeur de sortie de secours ASBR2.

Sur réception de ce paquet, le routeur de sortie de secours ASBR2 transfère ce paquet, conformément à sa table de commutation FIB_2, sur son interface if4 vers le routeur R2 du deuxième système autonome AS2, ce paquet étant enfin aiguillé au sein du deuxième système autonome vers la destination D.

La route suivie, après la panne, par les paquets entre le routeur coeur P et la destination D est représentée en traits pointillés sur la figure 2.

### Description détaillée d'un deuxième mode de réalisation

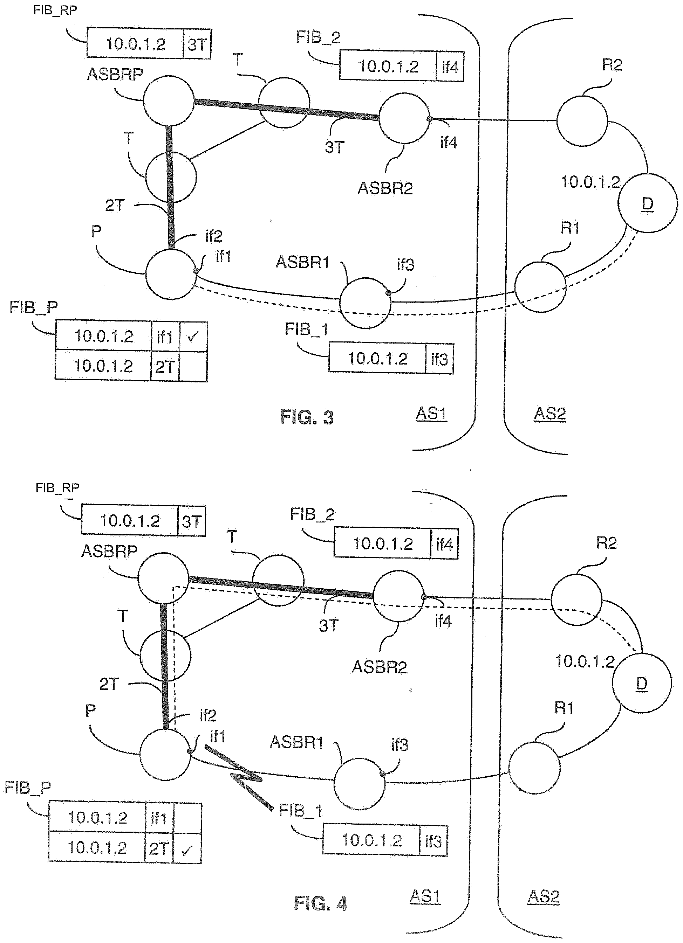

Nous allons maintenant décrire un deuxième mode de réalisation de l'invention en référence aux figures 3 et 4.

Dans l'exemple décrit ici, le premier système autonome AS1 comporte un routeur protecteur ASBRP conforme à l'invention entre le routeur coeur P et le routeur de sortie de secours ASBR2. La table de commutation du routeur protecteur ASBRP est référencée FIB_RP.

Dans l'exemple de la figure 3, on a représenté deux routeurs de transit T placés respectivement :
- entre le routeur coeur P et le routeur protecteur ASBRP ; et
- entre le routeur protecteur ASBRP et le routeur de sortie de secours ASBR2.

Ces routeurs de transit T sont optionnels, ils ne sont pas concernés par l'invention.

Dans l'exemple décrit ici, le routeur coeur P, le routeur protecteur ASBRP et le routeur de sortie ASBR2 coopèrent pour sécuriser les pannes affectant l'acheminement du trafic du routeur coeur P vers le routeur de sortie nominal ASBR1.

En conséquence, la table de commutation FIB_P du routeur coeur P comporte deux sorties pour la destination D d'adresse 10.0.1.2, à savoir :
- une sortie nominale, sur son interface if1, vers le routeur de sortie nominal ASBR1 ; et
- une sortie de secours vers une route prédéterminée dans un tunnel 2T ne passant pas par le routeur de sortie nominal ASBR1, l'extrémité de ce tunnel 2T étant constituée par le routeur protecteur ASBRP du premier système autonome AS1, ce routeur protecteur ASBRP étant apte à rediriger le trafic destiné au deuxième système autonome AS2 via le routeur de sortie de secours ASBR2.

Dans le mode de réalisation décrit ici, le tunnel 2T est utilisé uniquement pour la protection du routeur de sortie nominal ASBR1.

Si plusieurs routeurs de sortie nominaux étaient à protéger, on peut par exemple :
- dans une première variante, utiliser un tunnel spécifique pour chacun de ces routeurs nominaux ; ou
- dans une deuxième variante, utiliser un tunnel générique dans lequel on utiliserait un label contextuel pour différencier les paquets à l'origine destinés au routeur nominal particulier.

La figure 3 représente l'état du réseau avant la panne affectant la communication du routeur coeur P vers le routeur de sortie nominal ASBR1.

Aussi, seule la sortie nominale de la table de commutation FIB_P du routeur coeur P, est activée. En conséquence, lorsque le routeur coeur P reçoit un paquet destiné au site D, il envoie ce paquet sur son interface if1 à destination du routeur de sortie nominal.

Sur réception de ce paquet, le routeur de sortie nominal transfère ce paquet, conformément à sa table de commutation FIB_1, sur son interface if3 vers le routeur R1 du deuxième système autonome AS2, ce paquet étant enfin aiguillé au sein du deuxième système autonome vers la destination D.

La route suivie, avant la panne, par les paquets entre le routeur coeur P et la destination D est représentée en traits pointillés sur la figure 3.

Nous supposerons maintenant, en référence à la figure 4, que le lien entre le routeur coeur P et le routeur de sortie nominal ASBR1 tombe en panne.

Conformément à l'invention, le routeur coeur P détecte une panne affectant l'acheminement du trafic vers le routeur de sortie nominal ASBR1.

Suite à cette détection, il désactive la sortie nominale dans sa table de commutation FIB_P et active la sortie de secours vers le tunnel 2T.

Tant que cette sortie de secours est activée, lorsque le routeur coeur P reçoit un paquet destiné au site D, il envoie ce paquet dans le tunnel 2T vers le routeur protecteur ASBRP.

Sur réception de ce paquet, le routeur protecteur ASBRP transfère ce paquet, conformément à sa table de commutation FIB_RP, dans un tunnel 3T vers le routeur de sortie de secours ASBR2.

Sur réception de ce paquet, le routeur de sortie de secours ASBR2 transfère ce paquet, conformément à sa table de commutation FIB_2, sur son interface if4 vers le routeur R2 du deuxième système autonome AS2, ce paquet étant enfin aiguillé au sein du deuxième système autonome vers la destination D.

Dans le mode de réalisation décrit ici, le tunnel 3T est directement associé à l'interface if4. En variante, on pourrait utiliser un tunnel générique dans lequel on utiliserait un label contextuel pour différencier les paquets destinés à cette interface particulière.

Dans le mode de réalisation décrit ici, les différents routeurs ont l'architecture matérielle d'un ordinateur conventionnel. Ils comportent notamment un processeur, une mémoire morte de type ROM dans laquelle peut être stockée un programme d'ordinateur et une mémoire vive de type RAM permettant l'exécution de ce programme.

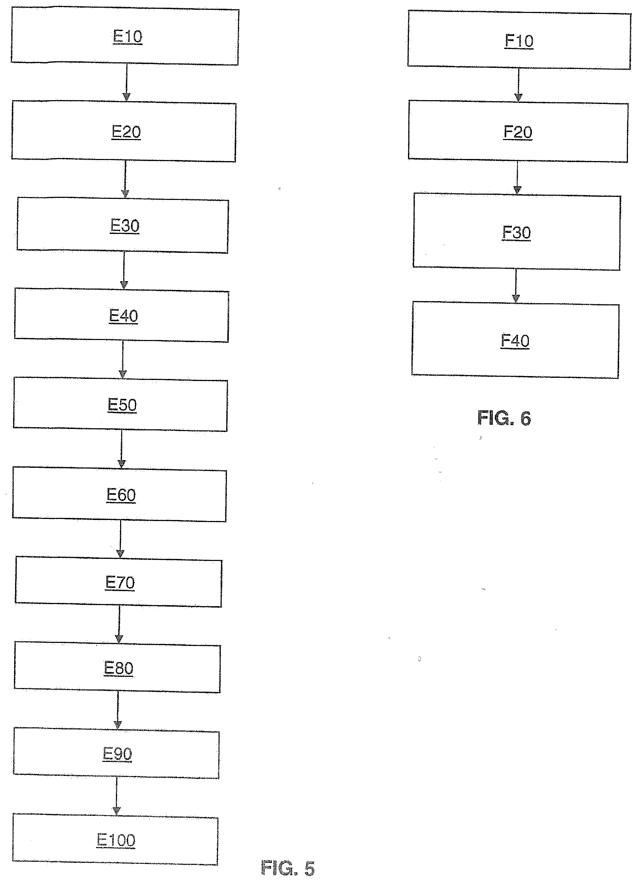

Dans le mode de réalisation décrit ici, le routeur coeur P conforme à l'invention mémorise, dans sa mémoire morte de type ROM, un programme d'ordinateur conforme à l'invention, ce programme comportant des instructions pour l'exécution des étapes d'un procédé de routage selon l'invention et dont les principales étapes E10 à E100 sont représentées sous forme d'organigramme à la figure 5.

Dans le mode de réalisation décrit ici, le routeur de sortie de secours ASBR2 et le routeur protecteur ASBRP conformes à l'invention mémorisent, dans leurs mémoires mortes de type ROM, un programme d'ordinateur conforme à l'invention, ce programme comportant des instructions pour l'exécution des étapes d'un procédé de routage selon l'invention et dont les principales étapes F10 à F40 sont représentées sous forme d'organigramme à la figure 6.

Ces procédés vont maintenant être décrits.

Au cours d'une première étape F10 de leurs procédés de routage, le routeur de sortie de secours ASBR2 et le routeur protecteur ASBRP annoncent leur fonction de protection ainsi que l'identifiant d'un groupe de protection auquel ils appartiennent.

On supposera dans cet exemple que :
- le routeur ASBR1 annonce « Routeur de Sortie Nominal », groupe 1 ;
- le routeur ASBR2 annonce « Routeur de Sortie de secours », groupe 1 ; et que
- le routeur ASBRP annonce « Routeur Protecteur », groupe 1.

Ces annonces sont reçues par le routeur coeur P conforme à l'invention au cours d'une étape E10 de son procédé de routage.

Conformément à l'invention il en déduit que les routeurs ASBR2 et ASBRP protègent le routeur de sortie nominal ASBR1, ces trois routeurs ayant annoncé appartenir au même groupe de protection d'identifiant 1.

On se place ici dans un exemple de réalisation de la deuxième variante. On suppose que ces routeurs s'échangent ensuite une information ou un label contextuel LB qui devra être utilisé en cas de panne affectant l'acheminement du trafic entre le routeur coeur P et le routeur de sortie nominal ASBR1.

Cet échange de label contextuel est effectué au cours d'une étape E20 du procédé de routage mis en oeuvre par le routeur coeur P et au cours d'une étape F20 du procédé de routage mis en oeuvre par le routeur de sortie de secours ASBR2 et par le routeur protecteur ASBRP.

Suite à la réception de ce label contextuel, chacun des routeurs ASBR2 et ASBRP configure une table de commutation contextuelle.

Plus précisément au cours d'une étape E30, le routeur coeur P préinstalle dans sa table de commutation FIB_P :
- une sortie nominale vers le routeur de sortie nominal ASBR1 ; et
- une sortie de secours dans un tunnel 1T vers le routeur de sortie de secours ASBR2 ou dans un tunnel 2T vers le routeur protecteur ASBRP.

Le premier et le deuxième choix précités permettent respectivement la mise en oeuvre de l'invention dans les deux modes de réalisation décrits précédemment en référence aux figures 1 et 2, respectivement 3 et 4.

Dans le mode particulier de réalisation qui vient d'être décrit, le routeur coeur P selon l'invention, lors de l'étape E10, identifie à partir d'annonces de groupes de protection le routeur de sortie de secours ASBR2 et le routeur protecteur ASBRP.

Dans une variante à ce mode particulier de réalisation, il utilise une table de correspondance dans laquelle sont pré-configurés les équipements (routeur protecteur, routeur de sortie de secours) devant être utilisés en cas de panne affectant un routeur de sortie nominal particulier. Ainsi, lors de l'étape E10, il identifie le routeur à utiliser en cas de panne à partir de la table de correspondance.

Dans le premier mode de réalisation, au cours d'une étape F30 de son procédé de routage, le routeur de sortie de secours ASBR2 crée une table de commutation contextuelle FIB_2 associée au label contextuel LB. Puis au cours d'une étape F40, il détermine les routes à insérer dans FIB_2.

Dans le deuxième mode de réalisation, au cours d'une étape F30 de son procédé de routage, le routeur protecteur ASBRP crée une table de commutation contextuelle FIB_RP associée au label contextuel LB. Puis au cours d'une étape F40, il détermine les routes à insérer dans FIB_RP.

Les procédés de routage mis en oeuvre dans le routeur de sortie de secours ASBR2 et dans le routeur protecteur ASBRP diffèrent dans la façon par laquelle ils déterminent les routes à insérer dans leurs tables contextuelles FIB_2 et FIB_RP.

Au cours de cette étape F40, le routeur de sortie de secours ASBR2 sélectionne la route parmi un ensemble de routes BGP potentielles duquel il retire:
- les routes dont le point de sortie (next hop) ou d'origine (originator_id) est le routeur de sortie nominal ASBR1 ; et
- les routes connues par une session BGP précédemment établie entre le routeur de sortie de secours ASBR2 et le routeur de sortie nominal ASBR1

Au cours de cette étape F40, le routeur protecteur ASBRP sélectionne la route parmi un ensemble de routes BGP potentielles duquel il retire:
- les routes dont le point de sortie (next_hop) ou d'origine (originator_id) est le routeur de sortie nominal ASBR1 ; et
- les routes connues par une session BGP précédemment établie entre le routeur protecteur ASBRP et le routeur de sortie nominal ASBR1.

Conformément à l'invention, les routes choisies par le routeur de sortie de secours ASBR2 et par le routeur protecteur ASBRP ne passent pas par le routeur de sortie nominal ASBR1.

Une fois la configuration de sa table de commutation FIB_P effectuée (étape E30), le routeur coeur P conforme à l'invention active, au cours d'une étape E40, la sortie nominale de cette table.

On suppose que le routeur coeur P selon l'invention détecte, au cours d'une étape E50 de son procédé de routage, une panne affectant l'acheminement du trafic vers le routeur de sortie nominal ASBR1.

Consécutivement à cette détection, il active, au cours d'une étape E60 la sortie de secours de façon à rediriger le trafic destiné au deuxième système autonome AS2 dans le tunnel 1T ou 2T. Au cours de cette même étape il désactive la sortie vers la route nominale.

Dans cet exemple de réalisation de la deuxième variante, le routeur coeur P ajoute le label contextuel LB à chaque paquet avant de l'envoyer dans le tunnel 1T ou 2T.

A la réception d'un paquet comprenant le label contextuel, le routeur de sortie de secours ASBR2, respectivement le routeur protecteur ASBRP, aiguille le paquet reçu à destination dudit deuxième système autonome en utilisant la table FIB_2, respectivement FIB_RP.

Dans l'exemple particulier de réalisation décrit ici, le routeur coeur P selon l'invention diffère l'annonce de la panne aux autres routeurs du premier système autonome AS1 pendant une durée prédéterminée.

A cet effet, il déclenche, au cours d'une étape E70, un compte à rebours initialisé avec cette durée prédéterminée.

Dans l'exemple particulier de réalisation décrit ici, le routeur coeur P selon l'invention annonce, pendant cette durée prédéterminée (étape E80), la métrique maximum permise par le protocole de routage interne pour joindre le routeur de sortie nominal. Il prévient ainsi la source du trafic qu'elle devrait si possible utiliser un chemin de secours.

A l'étape E90 de son procédé de routage, le routeur coeur P détecte l'expiration du compte à rebours.

Au cours d'une étape E100, il signale alors la panne de manière conventionnelle.

Dans un exemple particulier de la première variante, un unique tunnel est utilisé par panne. Dans ce cas, au cours d'une étape E20 du procédé de routage mis en oeuvre par le routeur coeur P et au cours d'une étape F20 du procédé de routage mis en oeuvre par le routeur de sortie de secours ASBR2 et par le routeur protecteur ASBRP, le routeur coeur P établit un tunnel avec le routeur de sortie de secours ASBR2 ou le routeur protecteur ASBRP et transmet une information que le tunnel est utilisé en cas de panne affectant l'acheminement du trafic vers le routeur de sortie nominal ASBR1. Dans ce cas, au cours de l'étape F30 de son procédé de routage, le routeur de sortie de secours ASBR2, respectivement le routeur protecteur ASBRP, crée une table de commutation contextuelle FIB_2, respectivement FIB_RP, associée à la panne. Puis au cours de l'étape F40, il détermine les routes à insérer dans la table de commutation contextuelle FIB_2, respectivement FIB_RP.

La réception d'un paquet dans ce tunnel indique au routeur de sortie de secours ASBR2, respectivement au routeur protecteur ASBRP, que la panne est survenue et qu'il doit rediriger le trafic à l'aide de la table de commutation contextuelle FIB_2, respectivement FIB_RP, définie pour cette panne.

## Revendications

1. Procédé de routage mis en oeuvre par un routeur coeur (P) dans un premier système autonome (AS1), ce routeur coeur (P) étant connecté à un routeur de sortie nominal (ASBR1) dudit premier système autonome (AS1), ledit routeur de sortie nominal (ASBR1) étant apte à acheminer un trafic destiné à un deuxième système autonome (AS2), le premier système autonome (AS1) comportant en outre au moins un routeur de sortie de secours (ASBR2), apte à acheminer un trafic destiné au deuxième système autonome (AS2), ledit routeur de sortie nominal et ledit routeur de sortie de secours étant des routeurs de bordure du premier système autonome qui annoncent des routes BGP pour lesquelles ils sont point de passage obligé,
ledit procédé comportant :
- une étape de réception (E10) des annonces (F10) faites par un routeur (ASBR2, ASBRP) du premier système autonome (AS1) qui est soit le routeur de sortie de secours (ASBR2), soit un routeur dit protecteur (ASBRP) du premier système autonome (AS1) apte à rediriger le trafic destiné au deuxième système autonome (AS2) via ledit au moins un routeur de sortie de secours (ASBR2), les annonces étant des fonctions de protection ainsi que l'identifiant d'un groupe de protection auquel le routeur appartient, afin que le routeur coeur puisse identifier un routeur apte à acheminer le trafic destiné au deuxième système autonome (AS2) en cas de panne affectant le trafic vers ledit routeur de sortie nominal (ASBR1),
- une étape d'échange (E20) d'un label contextuel (LB) entre le routeur coeur (P) et chacun desdits routeurs (ASBR2, ASBRP) ayant annoncé appartenir à un groupe de protection de même identifiant le label contextuel étant à utiliser lors d'une panne affectant l'acheminement du trafic dudit routeur coeur vers le routeur de sortie nominal (ASBR1),
- une étape (E30) de configuration d'une table de commutation FIB_P) qui comporte, pour une destination D dans le deuxième système autonome, une première sortie vers le routeur de sortie nominal et une deuxième sortie vers une route prédéterminée dans un tunnel (1T, 2T) ne passant pas par le routeur de sortie nominal (ASBR1) et dont l'extrémité est constituée par le routeur identifié,
- une étape d'activation (E40) de ladite première sortie,
- une étape de détection (E50) d'une panne affectant l'acheminement du trafic vers ledit routeur de sortie nominal (ASBR1) ;
- une étape d'activation (E60) de ladite deuxième sortie en réponse à ladite étape de détection (E50), et
- une étape d'ajout dudit label contextuel (LB) aux paquets du trafic envoyé dans ledit tunnel.

2. Procédé de routage selon la revendication 1, dans lequel l'étape d'identification comprend l'utilisation d'une table de correspondance indiquant un routeur à utiliser en cas de panne.

3. Programme d'ordinateur comportant des instructions pour l'exécution des étapes d'un procédé de routage selon la revendication 1 lorsque ledit programme est exécuté par un ordinateur.

4. Routeur coeur comprenant des moyens adaptés pour mettre en oeuvre un procédé de routage selon la revendication 1.

5. Procédé de routage mis en oeuvre dans un routeur de sortie de secours (ASBR2) dans un premier système autonome (AS1) et apte à acheminer un trafic destiné à un deuxième système autonome (AS2), le premier système autonome (AS1) comportant en outre au moins un routeur de sortie nominal (ASBR1), apte à acheminer un trafic destiné au deuxième système autonome (AS2), ledit routeur de sortie nominal et ledit routeur de sortie de secours étant des routeurs de bordure du premier système autonome qui annoncent des routes BGP pour lesquelles ils sont point de passage obligé,
ce procédé comportant:
- une étape d'annonce (F10) de fonctions de protection ainsi que l'identifiant d'un groupe de protection auquel le routeur appartient,
- une étape d'échange (F20), chacun desdits routeurs (P) ayant annoncé appartenir à un groupe de protection de même identifiant dudit premier système autonome (AS1), d'un label contextuel (LB) à utiliser lors d'une panne affectant l'acheminement du trafic dudit routeur coeur (P) vers le routeur de sortie nominal (ASBR1) ;
- une étape de création (F30) d'une table de commutation (FIB_2) contextuelle associée au label contextuel et comportant au moins une route vers ledit deuxième système autonome (AS2), ladite route ne passant pas par ledit routeur de sortie nominal (ASBR1) ; et
- une étape d'aiguillage des paquets reçus avec ledit label contextuel (LB) en utilisant ladite table (FIB_2) à destination dudit deuxième système autonome.

6. Procédé de routage selon la revendication 5, dans lequel le routeur de sortie de secours (ASBR2) sélectionne ladite route parmi un ensemble de routes BGP potentielles duquel il retire:
- les routes dont le point de sortie (next hop) ou d'origine (originator_id) est ledit routeur de sortie nominal (ASBR1) ; et
- les routes connues par une session BGP précédemment établie entre ledit routeur de sortie de secours (ASBR2) et ledit routeur de sortie nominal (ASBR1).

7. Programme d'ordinateur comportant des instructions pour l'exécution des étapes d'un procédé de routage selon la revendication 5 lorsque ledit programme est exécuté par un ordinateur.

8. Routeur de sortie comprenant des moyens adaptés pour mettre en oeuvre un procédé de routage selon la revendication 5.

9. Procédé de routage mis en oeuvre dans un routeur protecteur (ASBRP) dans un premier système autonome (AS1), le premier système autonome (AS1) comportant au moins un routeur de sortie nominal (ASBR1) et un routeur de sortie de secours (ASBR2), chacun desdits routeurs de sortie (ASBR1, ASBR2) étant apte à acheminer un trafic destiné au deuxième système autonome (AS2), ledit routeur de sortie nominal et ledit routeur de sortie de secours étant des routeurs de bordure du premier système autonome qui annoncent des routes BGP pour lesquelles ils sont point de passage obligé,
ce procédé comportant:
- une étape d'annonce (F10) de fonctions de protection ainsi que l'identifiant d'un groupe de protection auquel le routeur appartient,
- une étape d'échange (F20), avec chacun desdits routeurs (P) ayant annoncé appartenir à un groupe de protection de même identifiant dudit premier système autonome (AS1), d'un label contextuel (LB) à utiliser lors d'une panne affectant l'acheminement du trafic dudit routeur coeur (P) vers le routeur de sortie nominal (ASBR1) ;
- une étape de création (F30) d'une table de commutation (FIB_RP) contextuelle associée au label contextuel et comportant au moins une route vers ledit deuxième système autonome (AS2), la route passant par le routeur de sortie de secours (ASBR2), ladite route utilisant un tunnel de sortie (3T) vers ledit routeur de sortie de secours (ASBR2) ne passant pas par ledit routeur de sortie nominal (ASBR1) ; et
- une étape d'aiguillage des paquets reçus avec ledit label contextuel (LB) en utilisant ladite table (FIB_RP), dans ledit tunnel de sortie (3T) à destination du deuxième système autonome.

10. Procédé de routage selon la revendication 9, dans lequel le routeur protecteur met en oeuvre un protocole de type BGP et sélectionne ladite route parmi un ensemble de routes BGP potentielles duquel il retire:
- les routes dont le point de sortie (next_hop) ou d'origine (originator_id) est ledit routeur de sortie nominal (ASBR1) ; et
- les routes connues par une session BGP précédemment établie entre ledit routeur protecteur (ASBRP) et ledit routeur de sortie nominal (ASBR1).

11. Programme d'ordinateur comportant des instructions pour l'exécution des étapes d'un procédé de routage selon la revendication 9 lorsque ledit programme est exécuté par un ordinateur.

12. Routeur de sortie comprenant des moyens adaptés pour mettre en oeuvre un procédé de routage selon la revendication 9.

## Patentansprüche

1. Routingverfahren, das von einem Kernrouter (P) in einem ersten autonomen System (AS1) durchgeführt wird, wobei dieser Kernrouter (P) mit einem Nennausgangsrouter (ASBR1) des ersten autonomen Systems (AS1) verbunden ist, wobei der Nennausgangsrouter (ASBR1) geeignet ist, einen für ein zweites autonomes System (AS2) bestimmten Verkehr weiterzuleiten, wobei das erste autonome System (AS1) darüber hinaus mindestens einen Ersatzausgangsrouter (ASBR2) umfasst, der geeignet ist, einen für das zweite autonome System (AS2) bestimmten Verkehr weiterzuleiten, wobei der Nennausgangsrouter und der Ersatzausgangsrouter Border-Router des ersten autonomen Systems sind, die BGP-Routen ankündigen, für die sie die Zwangsübergangsstelle sind,
wobei das Verfahren umfasst:
- einen Schritt des Empfangens (E10) der Ankündigungen (F10), die von einem Router (ASBR2, ASBRP) des ersten autonomen Systems (AS1) gemacht werden, der entweder der Ersatzausgangsrouter (ASBR2) ist oder ein sogenannter Sicherungsrouter (ASBRP) des ersten autonomen Systems (AS1), der geeignet ist, den für das zweite autonome System (AS2) bestimmten Verkehr über den mindestens einen Ersatzausgangsrouter (ASBR2) umzuleiten, wobei die Ankündigungen Sicherungsfunktionen sind sowie die Kennung einer Sicherungsgruppe, der der Router angehört, damit der Kernrouter einen Router identifizieren kann, der geeignet ist, den für das zweite autonome System (AS2) bestimmten Verkehr im Fall einer Störung, die den Verkehr zu dem Nennausgangsrouter (ASBR1) betrifft, weiterzuleiten,
- einen Schritt des Austauschens (E20) eines kontextbezogenen Labels (LB) zwischen dem Kernrouter (P) und jedem der Router (ASBR2, ASBRP), die angekündigt haben, einer Sicherungsgruppe mit derselben Kennung anzugehören, wobei das kontextbezogene Label bei einer Störung zu verwenden ist, die die Weiterleitung des Verkehrs vom Kernrouter zum Nennausgangsrouter (ASBR1) betrifft,
- einen Schritt (E30) des Konfigurierens einer Switchingtabelle (FIB_P), die für ein Ziel D im zweiten autonomen System einen ersten Ausgang zum Nennausgangrouter und einen zweiten Ausgang zu einer vorherbestimmten Route in einen Tunnel (1T, 2T) umfasst, der nicht über den Nennausgangsrouter (ASBR1) verläuft und dessen Ende durch den identifizierten Router gebildet wird,
- einen Schritt des Aktivierens (E40) des ersten Ausgangs,
- einen Schritt des Detektierens (E50) einer Störung, die die Weiterleitung des Verkehrs zu dem Nennausgangsrouter (ASBR1) betrifft;
- einen Schritt des Aktivierens (E60) des zweiten Ausgangs als Antwort auf den Detektierungsschritt (E50) und
- einen Schritt des Hinzufügens des kontextbezogenen Labels (LB) zu den Paketen des in den Tunnel geschickten Verkehrs.

2. Routingverfahren nach Anspruch 1, wobei der Schritt des Identifizierens die Verwendung einer Korrespondenztabelle umfasst, die einen im Störungsfall zu verwendenden Router angibt.

3. Computerprogramm mit Anweisungen zum Ausführen der Schritte eines Routingverfahrens nach Anspruch 1, wenn das Programm von einem Computer ausgeführt wird.

4. Kernrouter mit Mitteln, die geeignet sind, ein Routingverfahren nach Anspruch 1 durchzuführen.

5. Routingverfahren, das in einem Ersatzausgangsrouter (ASBR2) in einem ersten autonomen System (AS1) durchgeführt wird und geeignet ist, einen für ein zweites autonomes System (AS2) bestimmten Verkehr weiterzuleiten, wobei das erste autonome System (AS1) darüber hinaus mindestens einen Nennausgangsrouter (ASBR1) umfasst, der geeignet ist, einen für das zweite autonome System (AS2) bestimmten Verkehr weiterzuleiten, wobei der Nennausgangsrouter und der Ersatzausgangsrouter Border-Router des ersten autonomen Systems sind, die BGP-Routen ankündigen, für die sie die Zwangsübergangsstelle sind,
wobei das Verfahren umfasst:
- einen Schritt des Ankündigens (F10) von Sicherungsfunktionen sowie der Kennung einer Sicherungsgruppe, der der Router angehört,
- einen Schritt des Austauschens (F20), wobei jede der Router (P) angekündigt haben, einer Sicherungsgruppe mit derselben Kennung wie das erste autonome System (AS1) anzugehören, eines kontextbezogenen Labels (LB, das bei einer Störung zu verwenden ist, die die Weiterleitung des Verkehrs vom Kernrouter (P) zum Nennausgangsrouter (ASBR1) betrifft;
- einen Schritt des Erstellens (F30) einer kontextbezogenen Switchingtabelle (FIB_2), die zu dem kontextbezogenen Label gehört und mindestens eine Route zu dem zweiten autonomen System (AS2) umfasst, wobei die Route nicht über den Nennausgangsrouter (ASBR1) verläuft, und
- einen Schritt des Lenkens der empfangenen Pakete mit dem kontextbezogenen Label (LB) unter Verwendung der Tabelle (FIB_2) an das zweite autonome System.

6. Routingverfahren nach Anspruch 5, wobei der Ersatzausgangsrouter (ASBR2) die Route aus einer Gruppe potenzieller BGP-Routen auswählt, der er entnimmt:
- die Routen, deren Ausgangspunkt (next_hop) oder Ursprungspunkt (originator_id) der Nennausgangsrouter (ASBR1) ist, und
- die Routen, die durch eine zuvor zwischen dem Ersatzausgangsrouter (ASBR2) und dem Nennausgangsrouter (ASBR1) aufgebaute BGP-Sitzung bekannt sind.

7. Computerprogramm mit Anweisungen zum Ausführen der Schritte eines Routingverfahrens nach Anspruch 5, wenn das Programm von einem Computer ausgeführt wird.

8. Ausgangsrouter mit Mitteln, die geeignet sind, ein Routingverfahren nach Anspruch 5 durchzuführen.

9. Routingverfahren, das in einem Sicherungsrouter (ASBRP) in einem ersten autonomen System (AS1) durchgeführt wird, wobei das erste autonome System (AS1) mindestens einen Nennausgangsrouter (ASBR1) und einen Ersatzausgangsrouter (ASBR2) umfasst, wobei jeder der Ausgangsrouter (ASBR1, ASBR2) geeignet ist, einen für das zweite autonome System (AS2) bestimmten Verkehr weiterzuleiten, wobei der Nennausgangsrouter und der Ersatzausgangsrouter Border-Router des ersten autonomen Systems sind, die BGP-Routen ankündigen, für die sie die Zwangsübergangsstelle sind,
wobei das Verfahren umfasst:
- einen Schritt des Ankündigens (F10) von Sicherungsfunktionen sowie der Kennung einer Sicherungsgruppe, der der Router angehört,
- einen Schritt des Austauschens (F20), mit jedem der Router (P), die angekündigt haben, einer Sicherungsgruppe mit derselben Kennung wie das erste autonome System (AS1) anzugehören, eines kontextbezogenen Labels (LB), das bei einer Störung zu verwenden ist, die die Weiterleitung des Verkehrs vom Kernrouter (P) zum Nennausgangsrouter (ASBR1) betrifft;
- einen Schritt des Erstellens (F30) einer kontextbezogenen Switchingtabelle (FIB_RP), die zu dem kontextbezogenen Label gehört und mindestens eine Route zu dem zweiten autonomen System (AS2) umfasst, wobei die Route über den Ersatzausgangsrouter (ASBR2) verläuft, wobei die Route einen Ausgangstunnel (3T) zu dem Ersatzausgangsrouter (ASBR2) verwendet, der nicht über den Nennausgangsrouter (ASBR1) verläuft, und
- einen Schritt des Lenkens der empfangenen Pakete mit dem kontextbezogenen Label (LB) unter Verwendung der Tabelle (FIB_RP) in den Ausgangstunnel (3T) an das zweite autonome System.

10. Routingverfahren nach Anspruch 9, wobei der Sicherungsrouter ein Protokoll vom Typ BGP einsetzt und die Route aus einer Gruppe potenzieller BGP-Routen auswählt, der er entnimmt:
- die Routen, deren Ausgangspunkt (next_hop) oder Ursprungspunkt (originator_id) der Nennausgangsrouter (ASBR1) ist, und
- die Routen, die durch eine zuvor zwischen dem Sicherungsrouter (ASBRP) und dem Nennausgangsrouter (ASBR1) aufgebaute BGP-Sitzung bekannt sind.

11. Computerprogramm mit Anweisungen zum Ausführen der Schritte eines Routingverfahrens nach Anspruch 9, wenn das Programm von einem Computer ausgeführt wird.

12. Ausgangsrouter mit Mitteln, die geeignet sind, ein Routingverfahren nach Anspruch 9 durchzuführen.

## Claims

1. Method of routing implemented by a core router (P) in a first autonomous system (AS1), this core router (P) being connected to a nominal output router (ASBR1) of said first autonomous system (AS1), said nominal output router (ASBR1) being able to forward traffic intended for a second autonomous system (AS2), the first autonomous system (AS1) furthermore comprising at least one backup output router (ASBR2), able to forward a traffic intended for the second autonomous system (AS2), said nominal output router and said backup output router being border routers of the first autonomous system which announce BGP routes for which they are compulsory transit point,
said method comprising:
- a step (E10) of receiving the announcements (F10) made by a router (ASBR2, ASBRP) of the first autonomous system (AS1) which is either the backup output router (ASBR2), or a so-called protector router (ASBRP) of the first autonomous system (AS1) able to redirect the traffic intended for the second autonomous system (AS2) via said at least one backup output router (ASBR2), the announcements being protection functions as well as the identifier of a protection group to which the router belongs, so that the core router can identify a router able to forward the traffic intended for the second autonomous system (AS2) in case of fault affecting the traffic bound for said nominal output router (ASBR1),
- a step (E20) of exchanging a contextual label (LB) between the core router (P) and each of said routers (ASBR2, ASBRP) having announced that they belong to a protection group of like identifier, the contextual label having to be used upon a fault affecting the forwarding of the traffic from said core router to the nominal output router (ASBR1),
- a step (E30) of configuring a switching table (FIB_P) which comprises, for a destination D in the second autonomous system, a first output to the nominal output router and a second output to a predetermined route in a tunnel (1T, 2T) not passing through the nominal output router (ASBR1) and whose end consists of the identified router,
- a step (E40) of activating said first output,
- a step (E50) of detecting a fault affecting the forwarding of the traffic to said nominal output router (ASBR1);
- a step (E60) of activating said second output in response to said detection step (E50), and
- a step of adding said contextual label (LB) to the packets of the traffic sent through said tunnel.

2. Method of routing according to Claim 1, in which the identifying step comprises the use of a lookup table of correspondence indicating a router to be used in case of fault.

3. Computer program comprising instructions for the execution of the steps of a routing method according to Claim 1 when said program is executed by a computer.

4. Core router comprising means suitable for implementing a routing method according to Claim 1.

5. Method of routing implemented in a backup output router (ASBR2) in a first autonomous system (AS1) and able to forward a traffic intended for a second autonomous system (AS2), the first autonomous system (AS1) further comprising at least one nominal output router (ASBR1) able to forward a traffic intended for the second autonomous system (AS2), said nominal output router and said backup output router being border routers of the first autonomous system which announce BGP routes for which they are compulsory transit point, this method comprising:
- a step (F10) of announcing protection functions as well as the identifier of a protection group to which the router belongs,
- a step (F20) of exchanging, each of said routers (P) having announced that they belong to a protection group of like identifier of said first autonomous system (AS1), a contextual label (LB) to be used upon a fault affecting the forwarding of the traffic from said core router (P) to the nominal output router (ASBR1) ;
- a step (F30) of creating a contextual switching table (FIB_2) associated with the contextual label and comprising at least one route to said second autonomous system (AS2), said route not passing through said nominal output router (ASBR1); and
- a step of steering the packets received with said contextual label (LB) by using said table (FIB_2) towards said second autonomous system.

6. Method of routing according to Claim 5, in which the backup output router (ASBR2) selects said route from among a set of potential BGP routes, and from which it removes:
- the routes whose output point (next hop) or origin point (originator_id) is said nominal output router (ASBR1) ; and
- the routes known through a BGP session previously established between said backup output router (ASBR2) and said nominal output router (ASBR1).

7. Computer program comprising instructions for the execution of the steps for a routing method according to Claim 5 when said program is executed by a computer.

8. Output router comprising means suitable for implementing a routing method according to Claim 5.

9. Method of routing implemented in a protector router (ASBRP) in a first autonomous system (AS1), the first autonomous system (AS1) comprising at least one nominal output router (ASBR1) and a backup output router (ASBR2), each of said output routers (ASBR1, ASBR2) being able to forward a traffic intended for the second autonomous system (AS2), said nominal output router and said backup output router being border routers of the first autonomous system which announce BGP routes for which they are compulsory transit point, this method comprising:
- a step (F10) of announcing protection functions as well as the identifier of a protection group to which the router belongs,
- a step (F20) of exchanging, with each of said routers (P) having announced that they belong to a protection group of like identifier of said first autonomous system (AS1), a contextual label (LB) to be used upon a fault affecting the forwarding of the traffic from said core router (P) to the nominal output router (ASBR1);
- a step (F30) of creating a contextual switching table (FIB_RP) associated with the contextual label and comprising at least one route to said second autonomous system (AS2), the route passing through the backup output router (ASBR2), said route using an output tunnel (3T) to said backup output router (ASBR2) not passing through said nominal output router (ASBR1); and
- a step of steering packets received with said contextual label (LB) by using said table (FIB_RP), in said output tunnel (3T) towards the second autonomous system.

10. Method of routing according to Claim 9, in which the protector router implements a protocol of BGP type and selects said route from among a set of potential BGP routes from which it removes:
- the routes whose output point (next_hop) or origin point (originator_id) is said nominal output router (ASBRP1) ; and
- the routes known through a BGP session previously established between said protector router (ASBRP) and said nominal output router (ASBR1).

11. Computer program comprising instructions for the execution of the steps for a routing method according to Claim 9 when said program is executed by a computer.

12. Output router comprising means suitable for implementing a routing method according to Claim 9.
